# EUROPEAN PATENT SPECIFICATION

(11) **EP 4 219 115 B1**
(45) Date of publication and mention of the grant of the patent: **21.05.2025**
(21) Application number: 23152132.9
(22) Date of filing: 18.01.2023
(51) Int. Cl.: B29C 33/52, B29C 33/76, B29C 70/32, B29C 70/34, B29C 70/44

(54) **WATER-SOLUBLE SACRIFICAL MANDREL OF POLYMERIC MATERIAL FOR THE FABRICATION OF PARTS, ESPECIALLY HOLLOW/TUBULAR PARTS, AND PREFERABLY MADE OF COMPOSITE MATERIAL**
WASSERLÖSLICHER OPFER-DORN AUS POLYMERMATERIAL ZUR HERSTELLUNG VON TEILEN, INSBESONDERE HOHL-/ROHRTEILEN, VORZUGSWEISE AUS VERBUNDWERKSTOFF
MANDRIN DE MATIÈRE POLYMÈRE HYDROSOLUBLE SACRIFICIEL POUR LA FABRICATION DE PIÈCES, NOTAMMENT DE PIÈCES CREUSES/TUBULAIRES, ET DE PRÉFÉRENCE EN MATÉRIAU COMPOSITE

(30) Priority: 26.01.2022 IT 202200001343
(43) Date of publication of application: 02.08.2023
(73) Proprietor: Di Fulvio, Matteo, 65015 Montesilvano (PE) (IT)
(72) Inventor: Di Fulvio, Matteo, 65015 Montesilvano (PE) (IT)
(74) Representative: Baldi, Claudio

(56) References cited:
- EP-A1- 3 892 435
- WO-A1-2013/126981
- CN-A- 108 115 948
- DE-A1- 10 342 867
- US-A- 5 266 137
- US-A1- 2019 351 630
- US-A1- 2021 162 688

## Description

The present patent application for industrial invention relates to a water-soluble sacrificial mandrel of polymeric material for the fabrication of parts, especially hollow/tubular parts, and preferably made of composite material.

A hollow or tubular part is a part comprising at least one inlet that provides access to a cavity, said cavity being preferably axial.

The field of reference in which the present invention has been conceived relates to the sector of composite materials, and particularly to the sector relating to components preferably made of composite materials and having hollow parts (tubular geometries).

Said parts are generally used in the automotive, aerospace, marine and sporting industries.

The components with hollow parts or tubular parts are usually manufactured by means of a technique known as "vacuum bagging."

Such a technique allows for the fabrication of parts, which are preferably made of composite material, by means of lamination and provides for a mold and a bag connected to the mold.

The laminated composite material is interposed between the mold and the bag; after applying the vacuum to the bag, the bag pushes the laminated composite material onto the mold so that the laminated composite material acquires the desired shape.

However, such a technique is impaired by some drawbacks; in fact, with the "vacuum bag" technique, lamination cannot be performed on a male mold, since there would be a risk of producing a considerable concentration and overlapping of the fiber sheets used to form the part made of laminated composite material in a very small area.

Such a drawback could therefore result in a poor structural strength of the part made of composite material.

Still with reference to the vacuum bag technique, on the other hand, the lamination on a female mold is a very slow process, with a consequent increase of labor costs.

A further drawback of the "vacuum bagging" technique is related to the use of such a technique in the fabrication of complicated hollow parts, as it generates a high rejection rate and has a poor process repeatability, which usually depends on the operator performing the processing.

In view of the above, in order to overcome the aforementioned drawbacks, another technique often used to manufacture preferably hollow parts made of a composite material by means of lamination consists in using a rotating rubber mandrel that is wrapped with the resin pre-impregnated fiber sheets used to form the part of laminated composite material.

The shape of the part made of composite material depends on the geometries of the mandrel.

Generally speaking, the curing of the part made of composite material, which consists of the various resin pre-impregnated fiber sheets, is performed by placing the part in an oven or in an autoclave.

In the fabrication of tubular parts, the rubber mandrel is used together with an external counter mold.

Although the lamination with the rubber mandrel generally takes place on the female mold, lamination on a male mold is also possible.

Unlike the vacuum bag, the lamination on a female mold with the rubber mandrel produces a much lower reject rate and has a good process repeatability.

Nevertheless, the drawback that impairs both the vacuum bagging technique and the lamination with the rubber mandrel lies in the fact that both techniques are not efficient and are impossible to be used in the cases where the parts have a complicated tubular geometry, nodes, significant section changes, and/or outlet holes with a much smaller section than the maximum section of the part.

Conversely, when hollow parts with a particular internal surface are to be manufactured, a fabrication technique using a plaster mandrel is preferred.

The plaster mandrel technique is performed in the same way as the rubber mandrel technique, the difference being that the plaster can be machined in order to impart a particular geometry to the part.

However, the drawback that impairs the fabrication technique of the part made of laminated composite material with the plaster mandrel relates to the production and machining of the plaster mandrel.

In fact, the plaster mandrel is milled from a solid piece or is obtained by casting the plaster in a mold.

If the mandrel is made by casting on a mold, the plaster mandrel will be subject to shrinkage, thus compromising the geometry and the final characteristics of the mandrel itself and/or of the part made of composite material; if the mandrel is made by milling, the production and processing costs of the plaster are very high.

US2019351630A1 discloses a non-expanding mandrel that therefore does not impart any pressure to the laminated composite part. The only function of such a mandrel is to act as a support for the deposition of dry fibers and for the subsequent resin infusion process (at low temperature) and such a mandrel requires to be covered by a bag. In fact, such a mandrel cannot be used at a high temperature, and therefore it cannot be used in an autoclave or press process.

US2021162688A1 discloses a method for forming vascular components with a composite sacrificial body.

CN108115948A discloses a forming mandrel that is internally hollow and is made of composite material.

US5266137AU discloses a rigid segmented mandrel having a plurality of elongated sector pieces arranged side by side to form a peripheral wall of a hollow shell.

EP3892435A1 discloses a hybrid mandrel for forming a composite part comprising a core and a sleeve arranged around the core.

WO2013126981A1 discloses a method for making an article from a curable material, such as a flexible fiber-reinforced polymer.

The purpose of the present invention is to overcome the drawbacks of the prior art by devising an improved and versatile sacrificial mandrel that can be used in the production of laminated hollow parts on a male mold, preferably made of composite material and having a complicated tubular geometry, nodes, significant section changes and/or outlet holes having a much smaller section than the maximum section of the part.

Furthermore, an additional purpose of the present invention consists in devising such a sacrificial mandrel that can be manufactured rapidly and inexpensively.

Moreover, a further purpose of the present invention is to devise an assembly for the production of parts made of composite material.

These purposes are achieved in accordance with the invention with the features listed in the attached independent claim 1.

Advantageous achievements appear from the dependent claims.

The sacrificial mandrel according to the invention is defined by claim 1.

For the sake of explanatory clarity, the description of the sacrificial mandrel according to the invention continues with reference to the attached drawings, which are for illustrative and non-limiting purposes only, wherein:
- Fig. 1 is a diagrammatic view of a sacrificial mandrel according to the invention;
- Fig. 2 is a sectional view of a mold and of the sacrificial mandrel according to the invention, which is wrapped with fiber sheets;
- Fig. 3 is a diagrammatic view of a first embodiment of an assembly according to the invention;
- Fig. 4 is a schematic view of a second and preferred embodiment of the assembly according to the invention.

With reference to the attached figures, the sacrificial mandrel according to the invention is described, it being generally indicated with reference numeral (100).

The sacrificial mandrel (100) according to the invention is suitable for being used in the production of hollow parts, preferably made of composite material.

In particular, the parts of composite material are made from layers of resin pre-impregnated fiber sheets that are repeatedly wrapped around the mandrel.

Thus, it must be noted that the sacrificial mandrel (100) according to the invention acts as lamination support, for the proper polymerization and fabrication of the composite material.

The sacrificial mandrel (100) according to the invention is capable of being expanded during the polymerization step of the composite material of the part; said expansion characteristic of the sacrificial mandrel (100) will be described below in full detail.

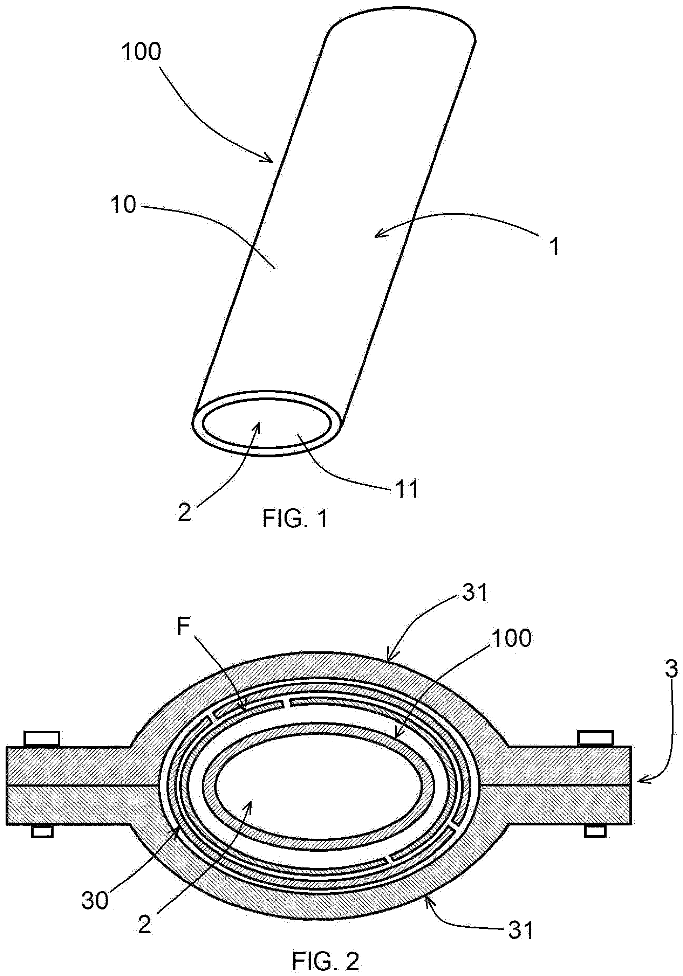

With reference to Fig. 1, the sacrificial mandrel (100) according to the invention comprises a wall (1) and a cavity (2) that is formed inside the sacrificial mandrel (100) and is partially defined by the wall (1).

Still with reference to Fig. 1, the sacrificial mandrel (100) has a hollow geometry and the wall (1) comprises an outer surface (10), which is suitable for going in contact with the fiber sheets (F), which constitute the composite material, and an inner surface (11) facing the cavity (2).

Although not shown in the attached figures, the sacrificial mandrel (100) can be made according to different geometries, depending on the desired shape of the part to be manufactured.

The sacrificial mandrel (100) is water-soluble and is made of a polymeric material composition.

Specifically, the polymeric material of the sacrificial mandrel (100) according to the invention comprises:
- polyvinyl alcohol in a percentage comprised between 80% and 99.7%; and
- polyvinyl acetate in a percentage comprised between 0.1% and 10%.

According to a preferred embodiment, said polymeric material of the sacrificial mandrel (100) also comprises latex in a percentage comprised between 0.1% and 20% and polyurethane rubber in a percentage comprised between 0.1% and 5%.

Advantageously, the polyvinyl alcohol, with which the sacrificial mandrel (100) is almost entirely made, gives the mandrel the characteristic of being water-soluble.

In fact, once the part has been made, the sacrificial mandrel, around which the part is still adhered, must be removed gently in order to obtain the finished part ready for the final finishing processes.

Due to its solubility in water, the sacrificial mandrel (100) according to the invention is dissolved in order to be completely and easily removed from the finished part.

Being water soluble, the mandrel (100) is not trapped in the internal structure of the part, thus enabling the fabrication of hollow parts with undercuts and/or nodes, so as to facilitate the removal of residues of the mandrel in correspondence with said undercuts and/or nodes.

In fact, the sacrificial mandrel (100) according to the invention can be completely removed from the finished part that is formed around it.

The complete removal of the sacrificial mandrel (100) is a function of the dissolution time of the sacrificial mandrel (100) itself, which in turn depends on both the thickness of the sacrificial mandrel (100) and on the conditions of the forced recirculation of the water used to dissolve the mandrel, that is to say the temperature of the water and the mechanical action of the water on the sacrificial mandrel (100).

Following are the results of a series of dissolution tests of the sacrificial mandrel (100) that were performed by the applicant; the dissolution tests reported a dissolution time of approximately six hours in still water at a temperature comprised between 15°C and 18°C, for a thickness of the sacrificial mandrel (100) of 2.5 mm.

The present description continues with reference to the characteristics of the sacrificial mandrel (100) according to the invention; it must be pointed out that the sacrificial mandrel (100) is preferably made by means of 3D printing, with a technique known as "additive manufacturing."

Because of the fabrication by means of the aforementioned technique, said sacrificial mandrel (100) comprises a plurality of layers which are mutually adhered, defining said sacrificial mandrel (100) structurally.

The 3D printing used for manufacturing the sacrificial mandrel (100) allows a high level of freedom in the design of the final part as the sacrificial mandrel (100) can be made, by means of 3D printing, according to more or less complicated geometries.

The advantage of using the 3D printing in the fabrication of the sacrificial mandrel (100) according to the invention enabled the applicant to fabricate male-laminated parts characterized by a complicated hollow geometry, which may have nodes, section changes, and outlet holes having a smaller section than the maximum section of the part.

In particular, unlike the mandrels described in the prior art, the sacrificial mandrel (100) according to the invention is not made by internally filling its volume, but comprises ribs/grooves obtained longitudinally or transversely on some of the layers that make up the mandrel and that are made during the 3D printing of the sacrificial mandrel (100) itself.

The internal ribs/grooves give the sacrificial mandrel (100) a structural stiffening due to an excellent lamination of the composite material on the sacrificial mandrel (100), which takes place without affecting the expandability characteristics in pressure and temperature of the sacrificial mandrel (100) itself.

A further object of the present invention consists of an assembly (A) for the fabrication of hollow parts made of composite material.

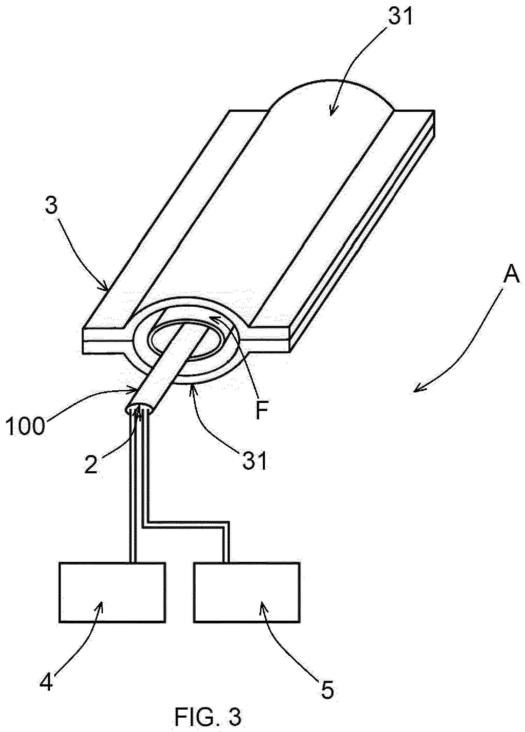

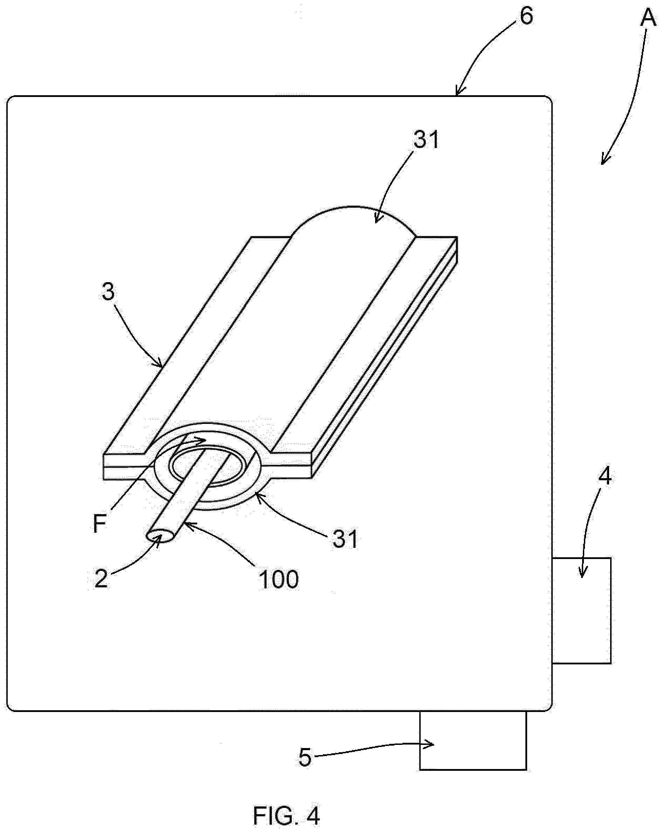

With reference to Figs. 3 and 4, in both embodiments of the assembly (A), the assembly (A) comprises a sacrificial mandrel (100) according to the invention and a mold (3).

Referring to Fig. 2, the mold (3) comprises a housing (30) that houses the sacrificial mandrel (100), and two half-shells (31) that laterally define the housing (30).

Although not shown in the attached figures, the mold (3) may comprise more than two half-shells, depending on the geometric complexity of the part of composite material to be made.

Referring to Fig. 2, the two half-shells (31) of the mold (3) are connected to each other by means of connecting means, which allow the mold (3) to be disposed in two different positions, i.e. a first position, wherein the mold (3) is closed and the two half-shells (31) are coupled and close to each other, and a second position, wherein the mold (3) is open and the two half-shells (31) are uncoupled and spaced apart.

The mold (3) of the sacrificial mandrel (100) according to the invention further comprises two cavities, each one of which is obtained in the two half-shells (31).

The two cavities are suitable for defining the outer profile of the part of composite material to be fabricated, when the two half-shells (31) are coupled together in the second position.

Finally, the mold (3) comprises an annular gap between the sacrificial mandrel (100) and the two cavities of the mold (3).

Said annular gap is either partially or totally occupied by the resin pre-impregnated fiber sheets (F) when the sacrificial mandrel (100), around which the fiber sheets are wrapped, is inserted into the mold (3).

In such a case, the fiber sheets can either be in contact with the two cavities of the mold (3) or not be in contact with the two cavities, leaving a distance of approximately 2.5 mm between the fiber sheets and the two cavities of the mold (3).

Laboratory tests have indeed reported that the sacrificial mandrel (100) according to the invention can expand up to a maximum of 2.8 mm.

The assembly (A) according to the invention further comprises pressure control means (4) suitably configured to generate and introduce a pressure inside the cavity (2) of the sacrificial mandrel (100), and heating means (5) suitably configured to heat the sacrificial mandrel (100).

With reference to Fig. 3, in the first embodiment of the assembly according to the invention, the pressure control means (4) and the heating means (5) are in communication with the cavity (2) of the sacrificial mandrel (100).

Referring to Fig. 4, according to its second and preferred embodiment, the assembly (A) comprises an autoclave (6), which comprises the pressure control means (4) and the heating means (5).

The present description continues with reference to a process for the fabrication of a tubular part of composite material using the assembly (A) according to the invention.

In such a case, for the sake of clarity, the process will be reported by referring to the use of the autoclave (6); the fabrication process of the hollow part of composite material can also be carried out by means of a different system compared to the one in which the autoclave is used, such as the one diagrammatically shown in Fig. 3, as long as the sacrificial mandrel (100) according to the invention, the mold (3), the pressure control means (4), and the heating means (5) are present.

More specifically, the fabrication process of a hollow part made of composite material comprises the following operational steps:
a) providing the assembly (A);
b) wrapping the sacrificial mandrel (100) with the resin pre-impregnated fiber sheets (F) suitable for forming the tubular part of composite material;
c) placing the sacrificial mandrel (100) inside said housing (30) of the mold (3);
d) closing the mold (3) bringing the two half-shells (31) close together into the second position;
e) operating the heating means (5) in such a way as to heat the sacrificial mandrel (100) so that it expands thermally;
f) operating the pressure control means (4) in such a way as to introduce pressure into the cavity (2) of the sacrificial mandrel (100), so as to push the resin pre-impregnated fiber sheets (F) against the mold (3), achieving the polymerization and the desired final geometry of the hollow part of composite material;
g) opening the mold (3), spacing the two half-shells (31) apart, bringing them into their second position;
h) extracting the tubular part of composite material, around the sacrificial mandrel (100), from the mold (3);
i) dissolving the sacrificial mandrel (100) in aqueous solution so that only the tubular part of composite material is obtained.

Specifically, step (e) and step (f) are simultaneously performed in the autoclave in a period of time comprised between 50 and 70 minutes, the sacrificial mandrel (100) is heated by the heating means (5) to a temperature comprised between 70°C and 130°C, whereas the pressure control means (4) are operated in order to introduce a pressure between 5 and 9 bar into the cavity (2) of the sacrificial mandrel (100).

Said working conditions are maintained inside the autoclave and the pressure is raised by one bar every 10 minutes during the aforementioned time period.

Advantageously, at the temperature and pressure reported above, the sacrificial mandrel (100) according to the invention expands by pushing the resin pre-impregnated fiber sheets (F) onto the two cavities of the mold (3) in such a way as to achieve the polymerization of the fiber sheets and the desired geometry of the part.

It should also be noted that the pressure and temperature conditions to which the sacrificial mandrel (100) is subjected, during the expansion of the sacrificial mandrel, may vary because they depend both on the characteristics of the polymeric material used to make the sacrificial mandrel and on the cycle of the autoclave (6).

The autoclave cycle also depends on the size, the material, the thermal inertia of the mold (3), and the characteristics of the resin pre-impregnated fibers.

During the autoclave cycle, at the temperature and pressure reported above, the sacrificial mandrel (100) according to the invention first softens, due to the fact that the glass transition temperature of approximately 70°C is exceeded, and expands by means of viscous sliding due to the pressure, which is gradually raised.

The viscous sliding caused by the pressure pushes the mandrel toward the two cavities of the mold (3).

In such a process, however, the sacrificial mandrel (100) remains in a solid state as its melting temperature is at approximately 210°C.

Advantageously, with reference to Fig. 2, the step (b) of laminating or layering of the fiber sheets (F) around the sacrificial mandrel (100) is implemented in such a way that the fiber sheets (F) are not overlapped on the sacrificial mandrel (100), thus overcoming the drawbacks described in the prior art.

Specifically, the junction points between one fiber sheet (F) and the other one are disposed along the entire section of the part instead of being concentrated in a single small area, namely the one between the two half-shells (31) of the mold (3), as it traditionally occurs.

In this way, the part will have an excellent structural integrity.

Advantageously, the sacrificial mandrel (100) according to the invention allows for the provision of hollow channels or grooves suitable for the fabrication of carbon tubular structures reinforced by a stiffening skeleton along the walls.

The advantages of the present invention are evident, since it provides for devising the improved sacrificial mandrel (100) for the fabrication of hollow/tubular parts with a complicated geometry and excellent mechanical and aesthetic characteristics, particularly for the fabrication of parts used in the aerospace or automotive sectors where a high mechanical performance is required in lightweighted parts.

A further advantage of the present invention is the fact that is allows for the sustainable and repeatable fabrication of a hollow/tubular part of composite material using the sacrificial mandrel (100) according to the invention.

Numerous variations and modifications of detail may be made to the present embodiment of the invention, within the scope of a person skilled in the art, but still within the scope of the invention as expressed by the appended claims.

## Claims

1. Water-soluble sacrificial mandrel (100) suitable for being used in the fabrication of tubular parts, preferably made of composite material; said mandrel (100) being water-soluble and comprising at least one polymeric material; said sacrificial mandrel (100) comprising at least one wall (1) and one cavity (2) formed inside said mandrel (100) and defined by said wall (1), at least partially; said wall (1) comprising an outer surface (10) and an inner surface (11) facing said cavity (2);
**characterized in that**
said polymeric material comprises:
- polyvinyl alcohol in a percentage comprised between 80% and 99.7%; and
- polyvinyl acetate in a percentage comprised between 0.1% and 10%.

2. The sacrificial mandrel (100) according to claim 1, wherein said polymeric material comprises latex in a percentage comprised between 0.1% and 20%.

3. The sacrificial mandrel (100) according to claim 1 or 2, wherein said polymeric material comprises a polyurethane rubber in a percentage comprised between 0.1% and 5%.

4. The sacrificial mandrel (100) according to any one of the preceding claims, wherein said mandrel (100) comprises a plurality of layers, which are adhered one to the other, defining said mandrel (100), and is preferably made by means of 3D printing.

5. The sacrificial mandrel (100) according to claim 4, wherein at least one of said layers comprise grooves/ribs along its length.

6. Assembly (A) for the fabrication of tubular parts made of composite material, comprising:
- a sacrificial mandrel (100) according to any one of the preceding claims;
- a mold (3) comprising a housing (30) that houses the sacrificial mandrel (100), and at least two half-shells (31) that laterally define said housing (30); said mold (3) comprising two cavities, each one of them is obtained on the two half-shells (31); said two cavities being suitable for defining the external profile of the part made of composite material to be realized, when the two half-shells (31) are coupled together;
- pressure control means (4) suitably configured so as to exert a pressure inside the cavity (2) of said mandrel (100);
- heating means (5) suitably configured so as to heat the sacrificial mandrel (100).

7. The assembly (A) according to claim 6, wherein said assembly (A) comprises an autoclave (6) comprising said pressure control means (4) and said heating means (5).

8. Process for the fabrication of a tubular part made of composite material using an assembly (A) according to claim 6 or 7; said process comprising the following steps:
a) provision of the assembly (A);
b) wrapping of the sacrificial mandrel (100) with fiber sheets (F) which are pre-impregnated with resin and are suitable for realizing the tubular part made of composite material;
c) positioning of said sacrificial mandrel (100) inside said housing (30) of the mold (3);
d) closing of said mold (3), bringing said two half-shells (31) close to each other;
e) operation of the heating means (5) in such a way as to heat said sacrificial mandrel (100) and cause its thermal expansion;
f) actuation of the pressure control means (4) in such a way as to introduce the pressure into the cavity (2) of said sacrificial mandrel (100) in order to push the fiber sheets (F), which are pre-impregnated with resin , against said mold (3), realizing said tubular part made of composite material;
g) opening of the mold (3), moving said half-shells (31) away from each other;
h) extraction of the tubular part made of composite material around the sacrificial mandrel (100) from the mold (3);
i) dissolving of the sacrificial mandrel (100) in aqueous solution so as to exclusively obtain the tubular part made of composite material.

9. The process according to claim 8, wherein said step e) and said step f) are performed simultaneously in a period of time comprised between 50 minutes and 70 minutes; wherein said step e) provides for heating the sacrificial mandrel (100) to a temperature comprised between 70°C and 130°C, whereas said step f) provides for introducing a pressure comprised between 5 bar and 9 bar into the cavity (2) of the sacrificial mandrel (100).

10. The process according to claim 9, wherein said pressure is increased by 1 bar every 10 minutes by means of said pressure control means (4).

## Patentansprüche

1. Wasserlöslicher Opferdorn (100), der geeignet ist, bei der Herstellung von rohrförmigen Teilen, vorzugsweise aus Verbundwerkstoff, verwendet zu werden; wobei der Dorn (100) wasserlöslich ist und mindestens ein Polymermaterial umfasst; wobei der Opferdorn (100) mindestens eine Wand (1) und einen Hohlraum (2) umfasst, der im Innern des Dorn (100) gebildet ist und mindestens teilweise durch die Wand (1) begrenzt ist; wobei die Wand (1) eine Außenfläche (10) und eine Innenfläche (11) umfasst, die dem Hohlraum (2) zugewandt ist;
**dadurch gekennzeichnet, dass**
das Polymermaterial Folgendes umfasst:
- Polyvinylalkohol in einem Prozentsatz zwischen 80 % und 99,7 %;
- Polyvinylacetat in einem Prozentsatz zwischen 0,1 % und 10 %.

2. Opferdorn (100) nach Anspruch 1, wobei das Polymermaterial Latex in einem Prozentsatz zwischen 0,1 % und 20 % umfasst.

3. Opferdorn (100) nach Anspruch 1 oder 2, wobei das Polymermaterial Polyurethangummi in einem Prozentsatz zwischen 0,1 % und 5 % umfasst.

4. Opferdorn (100) nach einem der vorstehenden Ansprüche, wobei der Dorn (100) eine Vielzahl von Schichten umfasst, die aneinanderhaften und den Dorn (100) definieren, und vorzugsweise mittels 3D-Druck hergestellt ist.

5. Dorn (100) nach Anspruch 4, wobei mindestens eine der Schichten Rillen/Rippen entlang seiner Länge umfasst.

6. Baugruppe (A) zur Herstellung von rohrförmigen Teilen aus Verbundwerkstoff, umfassend:
- einen Dorn (100) nach einem der vorstehenden Ansprüche;
- ein Formwerkzeug (3), umfassend ein Gehäuse (30), das den Opferdorn (100) aufnimmt und mindestens zwei Halbschalen (31), die das Gehäuse (30) seitlich definieren; wobei das Formwerkzeug (3) zwei Hohlräume umfasst, die jeweils auf den beiden Halbschalen (31) gebildet sind; wobei die beiden Hohlräume geeignet sind, das Außenprofil des aus Verbundwerkstoff herzustellenden Teils zu definieren, wenn die beiden Halbschalen (31) miteinander gekoppelt sind;
- Drucksteuermittel (4), die entsprechend konfiguriert sind, um einen Druck im Innern des Hohlraums (2) des Dorns (100) auszuüben;
- Heizmittel (5), die entsprechend konfiguriert sind, um den Opferdorn (100) erhitzen.

7. Baugruppe (A) nach Anspruch 6, wobei die Baugruppe (A) einen Druckkessel (6), umfassend die Drucksteuermittel (4) und die Heizmittel (5), umfasst.

8. Verfahren zur Herstellung eines rohrförmigen Teils aus Verbundwerkstoff unter Verwendung einer Baugruppe (A) nach Anspruch 6 oder 7; wobei das Verfahren folgende Schritte vorsieht:
a) Bereitstellen der Baugruppe (A);
b) Umwickeln des Opferdorns (100) mit Faserfolien (F), die mit Harz vorgetränkt sind und geeignet sind, das rohrförmige Teil aus Verbundwerkstoff zu bilden;
c) Bereitstellen des Opferdorns (100) im Innern des Gehäuses (30) des Formwerkzeugs (3);
d) Schließen des Formwerkzeugs (3), indem die beiden Halbschalen (31) einander angenähert werden;
e) Betätigen der Heizmittel (5) derart, dass der Opferdorn (100) erhitzt wird und dessen thermische Ausdehnung bewirkt wird;
f) Betätigen der Drucksteuermittel (4) derart, dass Druck in den Hohlraum (2) des Opferdorns (100) eingebracht wird, um die mit Harz vorgetränkten Faserfolien (F) gegen das Formwerkzeug (3) zu drücken und dadurch das rohrförmige Teil aus Verbundwerkstoff herzustellen;
d) Öffnen des Formwerkzeugs (3), indem die beiden Halbschalen (31) voneinander beabstandet werden;
h) Herausnehmen des rohrförmigen Teils aus Verbundwerkstoff rund um den Opferdorn (100) aus dem Formwerkzeug (3);
i) Auflösen des Opferdorns (100) in einer wässrigen Lösung, um ausschließlich das rohrförmige Teil aus Verbundwerkstoff zu erhalten.

9. Verfahren nach Anspruch 8, wobei der Schritt e) und der Schritt f) in einem Zeitraum zwischen 50 Minuten und 70 Minuten gleichzeitig durchgeführt werden; wobei der Schritt e) das Erhitzen des Opferdorns (100) auf eine Temperatur zwischen 70 °C und 130 °C vorsieht, während der Schritt f) das Einführen eines Drucks zwischen 5 bar und 9 bar in den Hohlraum (2) des Opferdorns (100) vorsieht.

10. Verfahren nach Anspruch 9, wobei der Druck mittels der Drucksteuermittel (4) alle 10 Minuten um 1 bar erhöht wird.

## Revendications

1. Mandrin sacrificiel (100) hydrosoluble apte à être employé dans la fabrication de pièces tubulaires, préférablement en matériel composite ; ledit mandrin (100) étant hydrosoluble et comprenant au moins un matériel polymérique ; ledit mandrin sacrificiel (100) comprenant au moins une paroi (1) et une cavité (2), réalisée à l'intérieur du susdit mandrin (100) et délimitée au moins partiellement par ladite paroi (1) ; ladite paroi (1) comprenant une surface externe (10) et une surface interne (11), orientée vers ladite cavité (2) ;
**caractérisé en ce que**
ledit matériel polymérique comprend :
- alcool polyvinylique présent en un pourcentage entre 80% et 99,7% ;
- acétate de polyvinyle présent en un pourcentage compris entre 0,1% et 10%.

2. Mandrin sacrificiel (100) selon la revendication 1, où ledit matériel polymérique comprend du latex présent en un pourcentage compris entre 0,1 e 20%.

3. Mandrin sacrificiel (100) selon la revendication 1 ou 2, où ledit matériel polymérique comprend un caoutchouc polyuréthane présent en un pourcentage compris entre 0,1% et 5%.

4. Mandrin sacrificiel (100) selon l'une quelconque des revendications précédentes, où ledit mandrin (100) comprend une pluralité de couches, adhérées entre elles en définissant ledit mandrin (100) et il est préférablement réalisé moyennant une impression 3D.

5. Mandrin sacrificiel (100) selon la revendication 4, où au moins l'une des susdites couches comprend des rainures/nervures le long de sa longueur.

6. Outillage (A) pour la fabrication de pièces tubulaires en matériel composite, comprenant :
- un mandrin sacrificiel (100) selon l'une quelconque des revendications précédentes ;
- un moule (3) comprenant un emplacement (30), qui loge le mandrin sacrificiel (100), et au moins deux semi-coques (31), qui délimitent latéralement ledit emplacement (30) ; ledit moule (3) comprenant deux empreintes, chacune desquelles est réalisée sur deux demi-coques (31) ; les deux susdites empreintes étant aptes à définir le profil externe de la pièce en matériel composite à réaliser, quand les deux demi-coques (31) sont couplées entre elles ;
- des moyens de contrôle de la pression (4) configurés de manière à exercer une pression à l'intérieur de la cavité (2) du susdit mandrin (100) ;
- des moyens de chauffage (5) configurés de manière à réchauffer le mandrin sacrificiel (100).

7. Outillage (A) selon la revendication 6, où ledit outillage (A) comprend une autoclave (6) comprenant les susdits moyens de contrôle de la pression (4) et les susdits moyens de chauffage (5).

8. Processus de fabrication d'une pièce tubulaire en matériel composite moyennant l'utilisation d'un outillage (A) selon la revendication 6 ou 7 ; ledit processus prévoyant les étapes suivantes :
a) prédisposer l'outillage (A) ;
b) enrouler le mandrin sacrificiel (100) avec des feuilles de fibres (F) pré-imprégnées de résine, aptes à constituer la pièce tubulaire en matériel composite ;
c) positionner ledit mandrin sacrificiel (100) à l'intérieur du susdit emplacement (30) du moule (3) ;
d) fermer le susdit moule (3) en rapprochant entre elles les deux susdites demi-coques (31) ;
e) actionner les moyens de chauffage (5) de façon à réchauffer le susdit mandrin sacrificiel (100) afin de le faire expandre thermiquement ;
f) actionner des moyens de contrôle de la pression (4) de façon à introduire la pression dans la cavité (2) du susdit mandrin sacrificiel (100) aux fins de pousser les feuilles de fibres (F) pré-imprégnées de résine contre ledit moule (3) en réalisant ladite pièce tubulaire en matériel composite ;
g) ouvrir le moule (3), en écartant les deux susdites demi-coques (31) ;
h) extraire la pièce tubulaire en matériel composite, autour du mandrin sacrificiel (100), du moule (3) ;
i) dissoudre le mandrin sacrificiel (100) dans une solution aqueuse afin d'obtenir exclusivement la pièce tubulaire en matériel composite.

9. Processus selon la revendication 8, où ladite étape e) et ladite étape f) sont effectuées simultanément dans une période de temps comprise entre 50 minutes et 70 minutes ; où ladite étape e) prévoit de réchauffer le mandrin sacrificiel (100) à une température comprise entre 70°C et 130°C, tandis que ladite étape f) prévoit d'introduire dans la cavité (2) du mandrin sacrificiel (100) une pression comprise entre 5 bar et 9 bar.

10. Processus selon la revendication 9, où ladite pression est augmentée d'1 bar chaque 10 minutes moyennant les susdits moyens de contrôle de la pression (4).
